Europäisches Patentamt

European Patent Office

Office européen des brevets

(19)

(11) Numéro de publication: **0 018 932**
**B1**

(12) **FASCICULE DE BREVET EUROPEEN**

(45) Date de publication du fascicule du brevet: **28.03.84**

(51) Int. Cl.³: **B 61 B 15/00, B 61 B 9/00**

(21) Numéro de dépôt: **80420055.8**

(22) Date de dépôt: **08.05.80**

(54) **Dispositif de transport funiculaire à double câble, bouclé sur lui-même et à variation de vitesse.**

(30) Priorité: 08.05.79 FR 7912141
16.01.80 FR 8001157
07.05.80 FR 8010659

(43) Date de publication de la demande:
12.11.80 Bulletin 80/23

(45) Mention de la délivrance du brevet:
28.03.84 Bulletin 84/13

(84) Etats contractants désignés:
BE CH DE GB IT LI NL SE

(56) Documents cités:
FR - A - 2 190 690
FR - A - 2 202 828
FR - A - 2 207 050
FR - A - 2 236 706
FR - A - 2 272 923
FR - A - 2 302 896
FR - A - 2 327 899
FR - A - 2 345 329
US - A - 1 886 050

REVUE DES CHEMINS DE FER, vol. 98, avril
1979 "Le trax, futur transport hectométrique de
la R.A.T.P?" pages 210, 211

(73) Titulaire: **CENTRE STEPHANOIS DE RECHERCHES
MECANIQUES HYDROMECANIQUE ET
FROTTEMENT Société dite:**
**Zone Industrielle Sud Rue Benoît Fourneyron
F-42160 Andrezieux Boutheon (FR)**

(72) Inventeur: **Aulagner, Michel**
**Paraboin - Saint Ferreol D Auroure
F-43303 Pont Salomon (FR)**
Inventeur: **Jour, Jean-Paul**
**La Merlée - 173 Route d'Andrézieux
F-42170 Saint Just Saint Rambert (FR)**

(74) Mandataire: **Maisonnier, Jean**
**Bureau Maisonnier 28 Rue Servient
F-69003 Lyon (FR)**

Dispositif de transport funiculaire à double câble, bouclé sur lui-même et à variation de vitesse.

La présente invention concerne un dispositif de transport en circuit fermé, à vitesse variable, et offrant les avantages d'un système à chaîne cinématique du type à funiculaire.

On connaît des modes de transports formés d'une suite de mobiles solidaires de dispositifs dont la cinématique de base est un funiculaire, depuis les premiers tramways accrochés à un câble, jusqu'aux cabines des téléphériques modernes.

Ces systèmes ont toujours présenté un inconvénient majeur: l'organe mobile (siège, wagon, conteneur), qu'il soit destiné au transport de passagers ou de marchandises, doit nécessairement, à l'entrée de la station, avant le ralentissement ou même l'arrêt, être désolidarisé du lien (généralement un câble ou une chaîne) qui constitue l'élément cinématique du funiculaire.

Par conséquent, dans les zones d'embarquement ou de ralentissement, l'organe mobile quitte un dispositif moteur programmé d'une façon donnée pour se solidariser d'un autre dispositif moteur programmé différemment du précédent: par exemple, le mobile quitte le câble qui réalise la cinématique du funiculaire pour s'accrocher à un câble plus lent, ou pour ralentir par ses propres moyens. En termes de mécanique, on dit que ce type de système présente une cinématique pour la ligne et une cinématique (différente) pour la station.

Plus récemment, sont apparus des systèmes dans lesquels le mobile reste toujours solidaire de la cinématique de base, c'est-à-dire du funiculaire, celui-ci réalisant lui-même les variations de vitesse aux points désirés.

Le schéma mécanique de ces systèmes est une chaîne dont le maillon est de longueur variable et est représenté par un équipage mobile et une longueur de lien. La variation de longueur du maillon assure la variation de la vitesse. Cependant, de tels systèmes sont, eux aussi, limités:

— par le fait que la tension sur le lien varie en sens inverse de la vitesse. Par exemple, si la variation de vitesse est de 1 à 20, la tension en petite vitesse sera, sur le lien, 20 fois plus élevée que la tension en grande vitesse. Par conséquent, il est nécessaire de dimensionner tous les organes et le lien variateur pour les tensions dans les zones à petite vitesse, donc de prévoir des pièces surdimensionnées et encombrantes dans les zones à grande vitesse;
— par le fait qu'en circuit bouclé sur lui-même, l'élément variateur doit transmettre l'effort de traction pour toute la longueur du circuit, aussi bien dans les zones de ralentissement que dans la zone à grande vitesse;
— par le fait que le dispositif de fixation, ou pince, d'un mobile sur la chaîne, doit être

calculé pour tracter toute une rame de mobiles, si bien que ses dimensions sont proportionnelles à la longueur du circuit et au nombre des mobiles.

Un système connu est constitué par exemple par le brevet français 2 207 050, qui décrit un système où des moyens de traction à vitesse constante sont constitués par un simple tapis sans fin sur lequel peuvent reposer les pieds des mobiles.

Ce système présente divers inconvénients, à savoir:

— le tapis sans fin ne peut avoir qu'un trajet rectiligne;
— les pieds étant seulement posés sur le tapis, rien ne les empêche d'y glisser, si les efforts deviennent importants, ce qui est rapidement le cas, dès que la longueur totale du trajet fermé est un peu longue;
— le glissement des pieds aura forcément lieu à certains emplacements, notamment sur un parcours sinueux ou dans les zones à basse vitesse des mobiles, puisqu'aucune régulation de tension n'est prévue;
— quand les pieds abordent le tapis, un choc vertical apparaît nécessairement dans le mobile, sinon son poids ne porterait pas, par la suite, sur le tapis.

En dehors des cas particuliers (téléphériques de montagne), les modes de transport du type "funiculaire" n'ont jamais pu se développer intensivement, car, en dehors de leurs avantages, ils présentent des inconvénients rédhibitoires:

— quand le mobile change de câble, on se heurte à des problèmes de secousses, d'accélération, de jerk, ainsi qu'à des problèmes de fiabilité et de sécurité dus aux solidarisations et désolidarisations répétées du mobile sur les câbles;
— quand on utilise un système à chaîne à maillons de longueur variable, le funiculaire est à la fois tracteur et variateur de vitesse. On se heurte alors à des problèmes de circulation et de tension sur le lien, d'entraînement, de traction et de freinage.

La présente invention vise à pallier tous les inconvénients précédents, en réalisant un dispositif qui conserve les avantages des cinématiques à funiculaire avec des moyens de régulation capables de toujours maintenir la tension du câble variateur en deçà d'une valeur limite prédéterminée notamment dant les zones de basses vitesses.

L'invention permet ainsi de protéger les zones à basse vitesse des tensions élevées qui pourraient résulter de causes telles que:

— multiplication importante du rapport des vitesses extrêmes;

— frottement excessif ou grippage d'un roulement;

— effort dû à la position "en chaînette" de la portion de câble variateur pendant librement entre deux mobiles successifs.

Un dispositifs de transport suivant l'invention, de type funiculaire, est composé d'une suite de mobiles, qui circulent le long d'un trajet bouclé sur lui-même, chaque mobile étant solidaire en permanence d'un premier lien variateur, qui réalise la variation de vitesse de déplacement de chaque mobile, et étant entraîné sur une partie du trajet par un second lien de traction, qui circule sur une voie bouclée à vitesse élevée et identique en tous points à un instant donné, et il est caractérisé en ce que chaque mobile est rendu solidaire du second lien de traction, par des moyens de liaison intermittente montés sur chaque mobile, et que le premier lien variateur est pourvu de moyens régulateurs pour maintenir sa tension mécanique constamment au-dessous d'un seuil prédéterminé, notamment dans les zones à vitesse variable des mobiles.

Diverses caractéristiques supplémentaires de l'invention sont précisées dans les revendications dépendantes.

Les dessins annexés, donnés à titre d'exemple non limitatif, permettront de mieux comprendre les caractéristiques de l'invention.

Figure 1 est une vue schématisée d'un funiculaire, comprenant un lien tracteur et un lien variateur, pour constituer un mode de transport à circuits bouclés sur eux-mêmes.

Figure 2 est une variante du circuit du mode de transport.

Figure 3 est une vue latérale d'un système comprenant des mobiles équipés de bobines.

Figure 4 est une vue suivant les flèches V—V (figure 5) d'une variante à chaîne du type à "mailles déformables".

Figure 5 est une vue de dessus de la variante de la figure 4.

Figure 6 illustre la disposition générale du funiculaire.

Figure 7 montre un dispositif pour détecter et réguler la tension dans le lien variateur.

Figure 8 illustre la régulation par mesure de l'effort appliqué par un mobile sur une rampe fixe de la structure.

Figures 9 et 10 sont des perspectives, respectivement de côté et de dessous (suivant la flèche F) d'une autre variante du circuit.

Figure 11 est une vue latérale schématique partielle d'un dispositif de transport suivant une variante de l'invention.

Figure 12 est une autre vue latérale partielle de ce dispositif.

Figure 13 est une vue montrant le diagramme des vitesses, en rapport avec la figure 12.

Figures 14 et 15 sont d'autres vues latérales partielles du dispositif de transport, suivant d'autres variantes.

Figure 16 est une section XVI—XVI (figure 15).

Figure 17 est une autre vue latérale partielle du dispositif de transport, suivant une autre variante.

Figure 18 est une section XVIII—XVIII (figure 17).

Figure 19 est une vue de dessus partielle du couple de poulies de serrage de la figure 18.

Figures 20 et 21 sont des vues latérales du dispositif de transport, suivant d'autres variantes.

Figures 22 est une vue du diagramme des vitesses en rapport avec la figure 21.

Figures 23 à 26 sont d'autres vues latérales partielles du dispositif de transport, suivant d'autres variantes.

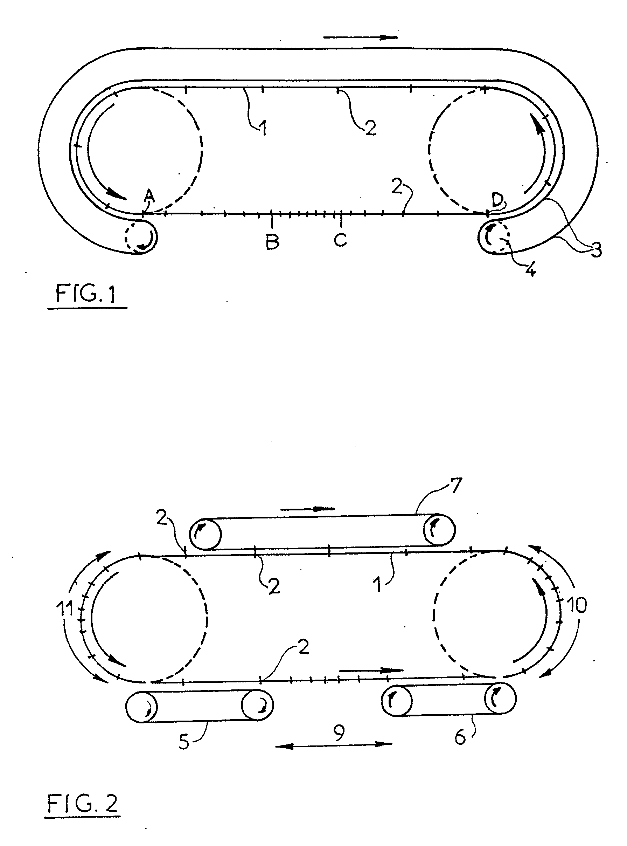

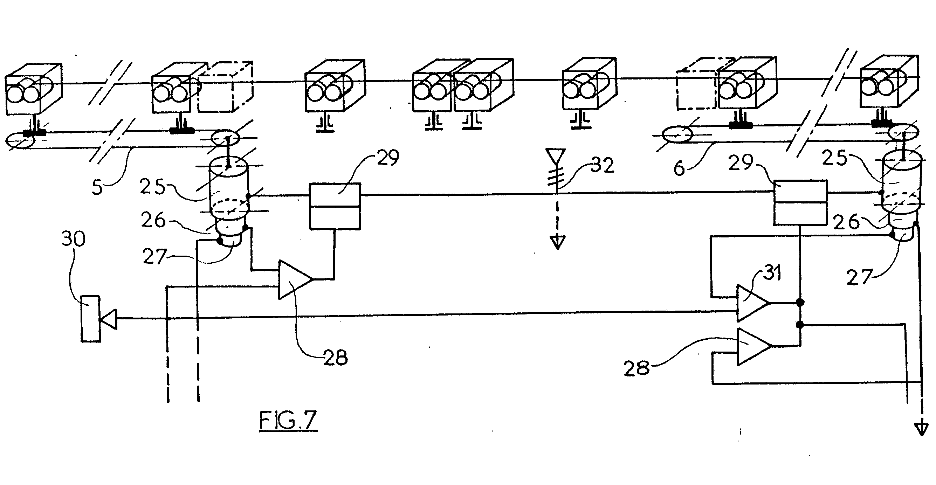

On a représenté en figure 1 un mode de transport utilisant une cinématique à funiculaire. Une chaîne à maillons de longueur variable 1 est bouclée sur elle-même. Chaque maillon porte un mobile 2 qui reste, en permanence, solidaire de la chaîne. Le système de transport est complété par un lien tracteur, par exemple un câble 3, bouclé sur lui-même et entraîné à vitesse élevée (égale à la plus grande vitesse des mobiles 2) par un dispositif moteur 4 d'un type quelconque connu. Cette vitesse élevée peut être constante, ou modifiée de temps à autre par un régulateur, pour réguler la tension mécanique (figure 7).

Alors que le funiculaire de la figure 1 ne comporte qu'une seule zone DA de défilement à grande vitesse et une seule zone de station comprenant le tronçon AB de décélération, le tronçon BC de petite vitesse (ou d'arrêt) et le tronçon CD d'accélération; la figure 2 illustre un circuit dont la chaîne 1 de variation coopère avec plusieurs tronçons de lien tracteur 5, 6, 7, chaque tronçon étant bouclé sur lui-même. Les liens tracteurs laissent libres, entre eux, les intervalles correspondant aux variations de vitesse des mobiles aux stations 9, 10, 11.

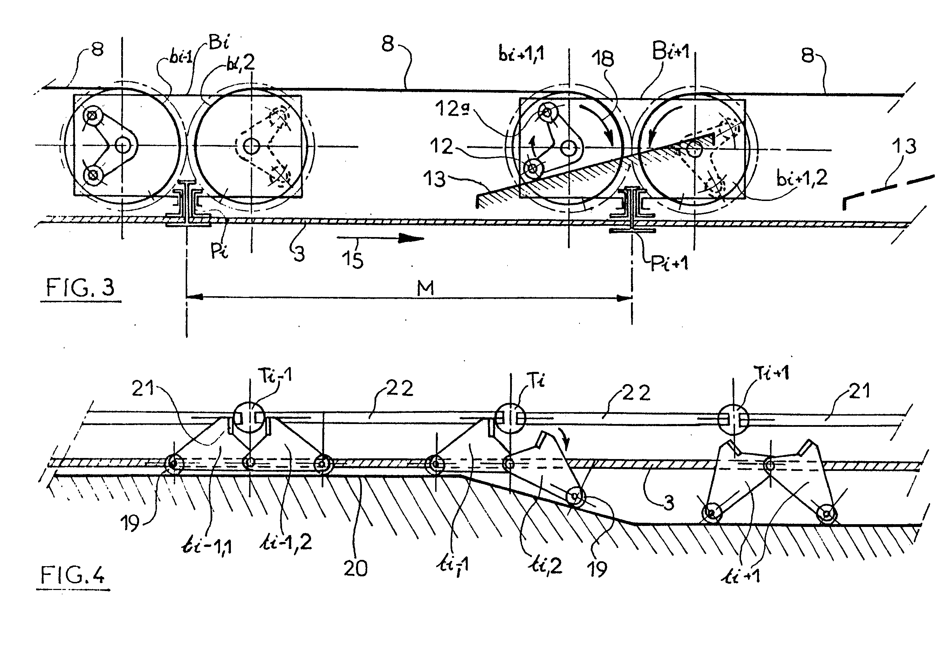

Dans les deux cas, les câbles tracteurs ne s'étendent que dans les zones à grande vitesse: les mobiles sont alors solidaires à la fois des deux liens variateur et tracteur. Au contraire, dans les zones de station (variation de vitesse), les mobiles sont désolidarisés du lien tracteur comme illustré aux figures 3 à 5 et 10, alors qu'ils restent fixés sur la chaîne ou lien variateur.

L'avantage de ce système de transport est que l'effort moteur est appliqué simultanément sur chacun des mobiles 2 situés dans les zones à grande vitesse. Cet effort de traction est assuré par le câble tracteur et non plus par la chaîne 1. Les organes de liaison entre les maillons de longueur variable peuvent ainsi être standardisés. En particulier, ils n'ont plus à être adaptés à la longueur du circuit fermé, ou à être calculés pour des tensions en petite vitesse.

La figure 3 montre une portion d'un système de transport dont les mobiles successifs sont constitués par des boggies $B_i$, $B_{i+1}$ ... tandis que le boggie amont $B_i$ est relié au boggie aval précédent $B_{i+1}$ par un câble variateur 8 ou lien variateur, qui s'enroule sur les bobines aval et amont, respectivement des boggies amont et aval. Par ailleurs, chaque bobine comporte un dispositif de commande en rotation, constitué par un plateau porte-galets 12 et 12$a$, capables de venir en butée contre des rampes 13 solidaires de la structure fixe du système de l'invention, et disposés dans les zones de variation de vitesse.

Sur la figure, on a représenté l'entrée d'une zone de ralentissement, le mouvement des mobiles se produisant de gauche à droite (direction de la flèche 15). Chaque boggie $B_i$ est muni d'une pince $P_i$ pour sa liaison, intermittente, par friction, avec le câble tracteur 3. Le mobile $B_i$ circule à grande vitesse constante. Il est solidaire par sa pince $P_i$, du câble 3 qui défile à grande vitesse constante. Le boggie ou mobile aval $B_{i+1}$ est entré dans la zone de ralentissement. Sa pince $P_{i+1}$ s'est ouverte sous l'effet d'un mécanisme de commande d'un type quelconque connu, non représenté, et placé dans la portion d'entrée de la station. Le boggie $B_{i+1}$ est désolidarisé du câble tracteur 3, mais reste solidaire de l'ensemble funiculaire formé par la suite des boggies, par le câble variateur 3.

Dans cette zone de ralentissement, la bobine $b_{i+1}$, 1 est entraînée en rotation dans la direction de la flèche 18, par action des rampes 13 sur le galet 12. La bobine enroule sur elle-même le câble variateur 8 et la longueur du maillon M, définie par la distance entre les pinces $P_i$ et $P_{i+1}$ diminue.

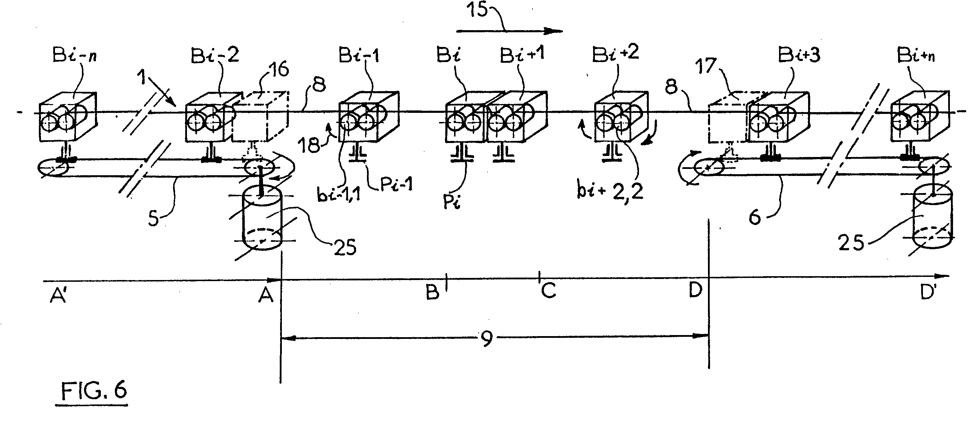

Dans le mode de réalisation de la figure 3, on a représenté des bobines amont et aval d'un boggie, qui engrènent l'une sur l'autre. Par ailleurs, le câble tracteur 3 défile tout au long de la ligne: on verra plus loin (figures 1, 6), que ce câble peut laisser libre la zone de variation de vitesse.

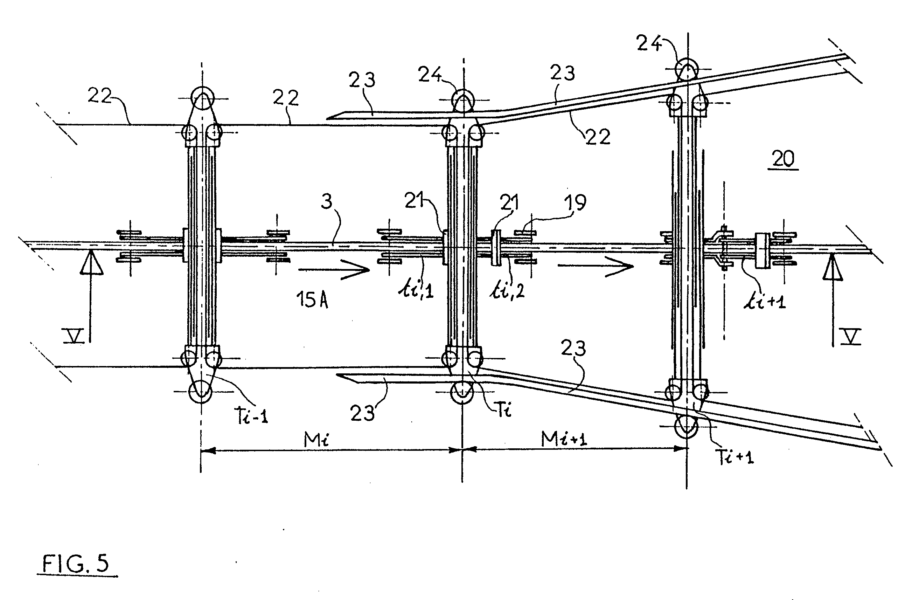

Une autre construction d'un système selon l'invention est illustrée aux figures 4 (vue latérale médiane) et 5 (vue de dessus). Le lien de traction 3 défile à vitesse constante élevée, de gauche à droite. Il porte, à intervalles réguliers, un moyen pour l'articulation d'une paire de taquets $t_{i, 1}$ et $t_{i, 2}$, munis de galets 19 pour glisser ou rouler sur les rampes 20 de la structure fixe du dispositif de transport, et de surfaces d'appui 21 pour constituer les organes de liaison positive entre le câble tracteur et une chaîne à maillons déformables. Les mobiles du système sont des traverses $T_i$ qui portent, de façon connue, des galets de renvoi pour des câbles ou des rubans 22, fermés sur eux-mêmes, chacun de longueur constante, ainsi que des moyens d'appui sur des rampes latérales 23 disposées dans les zones de variation de vitesse. On réalise une chaîne à maillons déformables $M_i$ (figure 5).

Les figures 4 et 5 montrent une zone de ralentissement. Les traverses $T_{i-1}$ et $T_i$ circulent à grande vitesse constante, suivant la flèche 15 A. Elles sont solidaires, par les taquets $t_{i-1}$, et $t_{i, 1}$, du câble tracteur 3 qui défile à vitesse constante. La traverse $T_{i+1}$ est entrée en phase de ralentissement: les taquets $t_{i+1}$ sont ouverts. La traverse est désolidarisée du câble 3. Ses deux chapes opposées s'écartent l'une de l'autre sous l'action des rampes 23, contre lesquelles viennent buter et rouler des galets 24. Le mobile $T_{i+1}$ reste solidaire de l'ensemble funiculaire de la suite des traverses par le ruban 22 qui forme un maillon à périmètre constant. Dans la zone des figures 4 et 5, le maillon $M_{i+1}$ se déforme en s'élargissant, donc en se raccourcissant, d'où un ralentissement du mobile $T_{i+1}$.

Les avantages du système de transport qui vient d'être décrit sont nombreux et évidents:

— que le mobile soit, ou non, solidaire du câble tracteur, qu'il soit à vitesse constante ou à vitesse variée, qu'il soit à grande ou à petite vitesse, il reste toujours solidaire d'un système à chaîne à maillons de longueur variable, bouclé sur lui-même, ce système programmant immuablement son écart avec le mobile qui le précède, et avec celui qui le suit. Ainsi, le "pas" du système de transport est conservé automatiquement, toute régulation individuelle de la vitesse ou de l'élongation des maillons étant désormais superflue;

— le mobile n'étant jamais libre, on peut simplifier à l'extrême les dispositifs de sécurité;

— tous les efforts qui concernent la traction, le freinage, l'arrêt d'urgence, la régulation sont affectés au seul lien tracteur, si bien que les organes de la chaîne à maillons de longueur variable (qui constitue le lien variateur) n'ont plus à être sur dimensionnés, donc encombrants. En outre, le lien variateur ne transmet que la tension nécessaire à tirer les mobiles dans les zones à vitesse variable, cette tension étant prise en charge, dans les zones à grande vitesse, par le lien de traction, bouclé sur lui-même, et qu'on peut aisément dimensionner largement;

— le système funiculaire suivant l'invention n'échange, aux frottements près, aucun travail, ni aucune chaleur avec l'extérieur. Le funiculaire, bouclé sur lui-même, ne dissipe pas, toujours aux frottements près, l'énergie pour la décélération des mobiles, quelles que soient leur masse et leur vitesse. De même, il est capable d'accélérer, puis de décélérer une masse quelconque, sans dissiper d'autre énergie que celle des frottements, la seule condition requise étant que la masse soit ôtée du système funiculaire à la même vitesse que celle à laquelle elle y avait été chargée;

— la cinématique funiculaire, bouclée sur elle-même, forme, selon l'invention, un ensemble mécanique obéissant, en tous points de la boucle, à une loi de vitesse pré-programmée, cet ensemble passant cycliquement par les mêmes étapes. On dispose ainsi d'un système de transport dans lequel aucun incident de caractère aléatoire n'est à envisager (à part le bris d'un organe mécanique ou un accident de personne);

— chaque élément de la chaîne est tracté, et une pince ne tire que le seul mobile auquel elle est affecté.

On a représenté en figure 6, la disposition générale du funiculaire selon l'invention. Les mobiles se déplacent de gauche à droite, et ils sont représentés par une suite de boggies $B_i$ tels que décrits précédemment, solidaires de la chaîne-variateur de vitesse 1. Dans cette réalisation, on met en oeuvre la caractéristique de l'invention selon laquelle les mobiles successifs sont désolidarisés du ou des câbles de traction 5, 6, dans la zone 9 de la station, zone correspondant aux variations de vitesse. Les câbles de traction 5 et 6, chacun bouclé sur lui-même, sont entraînés par des organes moteurs 25, d'un type connu, à une vitesse constante élevée. Ils circulent seulement face aux tronçons A' A et DD', où la chaîne 1 circule à grande vitesse constante, alors qu'ils laissent libres entre eux la zone 9 de variations de vitesse, qui comprend trois tronçons:

— un tronçon AB de décélération;
— un tronçon BC de petite vitesse, ou même d'arrêt;
— un tronçon CD d'accélération.

A l'entrée de la zone 9, on trouve un dispositif d'ouverture 16 des pinces et, à la sortie de 9, un dispositif de fermeture 17 desdites pinces $P_i \ldots P_{i+n}$.
Le fonctionnement et le mouvement du système dans la portion de circuit illustrée en figure 6 se font de la manière suivante:

— les boggies $B_{i-n}$ et $B_{i-2}$, toujours dans la zone de grande vitesse, sont solidaires du câble tracteur 5;
— à son passage au niveau du dispositif 16, le boggie $B_{i-1}$ a lâché le câble 5 (ouverture de sa pince $P_{i-1}$) pour pénétrer dans le tronçon AB de décélération. Les rampes 13 et les galets 12 de ce boggie font tourner la bobine amont $b_{i-1,1}$, suivant la flèche 18 (figure 3). Cette bobine s'enroule sur le câble variateur 8, et la distance entre $B_{i-2}$ et $B_{i-1}$ diminue;
— les boggies $B_i$ et $B_{i+1}$ sont sur le tronçon BC de petite vitesse;
— le boggie $B_{i+2}$ est représenté en phase d'accélération, sa bobine $b_{i+2,2}$, reliée par le câble variateur 8 au boggie précédent $B_{i+3}$ déroulant du câble sous l'action des rampes d'accélération;

— les boggies $B_{i+3}$, $B_{i+n}$ ayant franchi la zone 17 de fermeture et retrouvé la grande vitesse de circulation du lien tracteur 6 se sont resolidarisés avec ce dernier.

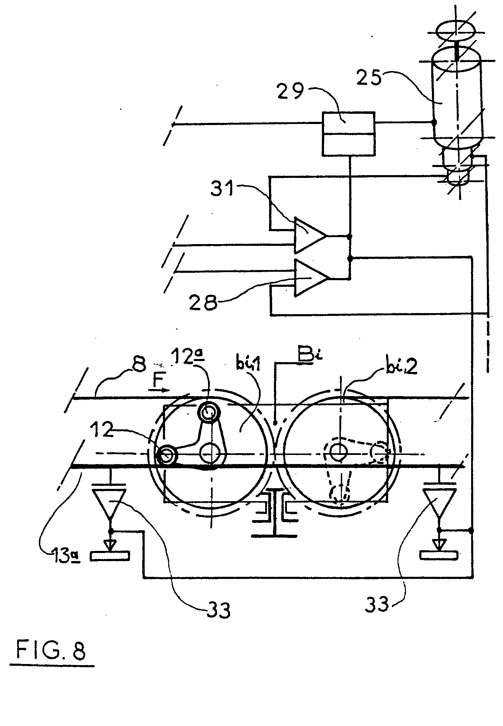

Ainsi, on n'a pas un câble tracteur continu, mais une suite de câbles tracteurs bouclés sur eux-mêmes. L'intérêt d'un tel système est d'éviter une augmentation anormale de la tension dans le câble variateur 8, à petite vitesse. A cet effet, le câble tracteur est interrompu dès que le mobile s'en est désolidarisé. Des dérapages éventuels des pinces $P_i$ qui relient de façon intermittente les mobiles aux liens tracteurs peuvent introduire, sans inconvénient majeur, une certaine augmentation de la tension à grande vitesse dans le lien variateur. En effet, d'une part cette tension dans la zone à grande vitesse est encaissée par les câbles tracteurs, d'autre part, le funiculaire selon la figure 6, comporte un dispositif simple de régulation illustré aux figures 7 et 8, et qui a pour but:

— d'interconnecter les organes moteurs 25 de chacun des câbles tracteurs bouclés sur eux-mêmes;
— de commander individuellement ces organes de façon que la tension dans le câble variateur ne dépasse jamais, à l'entrée d'une zone de décélération, une valeur prédéterminée, très faible. Si cette tension est F, la tension à une vitesse K fois plus petite, ne dépassera jamais la valeur KF qui reste faible.

Sur la figure 7, on a représenté une zone de variation de vitesse entre deux tronçons de circulation à grande vitesse de funiculaire, de façon analogue à la représentation de la figure 6. Les moteurs 25 des câbles de traction bouclés 5 et 6, sont connectés l'un à l'autre, par un système de régulation et de commande qui comprend, pour chaque moteur:

— une dynamo tachymétrique 26;
— un dispositif de mesure de décalage angulaire 27;
— un asservissement de vitesse 28;
— un régulateur de vitesse à quatre quadrants 29 qui commande, selon les besoins, l'un ou l'autre des moteurs 25.

Le système de régulation est en outre complété par:

— un affichage 30 de la vitesse de rotation;
— un asservissement 31 de la position angulaire;
— un circuit d'alimentation schématisé en 32.

Ce système de régulation a pour but de limiter la tension dans le câble variateur. La valeur de cette tension est détectée au moyen du dispositif illustré en figure 8. Le boggie $B_i$ en zone de station, ou zone à petite vitesse (correspondant au tronçon BC de la figure 6) est relié au boggie qui le suit et au boggie qui le précède, par le lien variateur 8, lequel s'enroule sur des bobines $b_i$ solidaires en rotation de galets 12 et 12a en appui contre la rampe 13a qui fait partie de la structure fixe du système. La tension exercée sur le lien 8 introduit un couple dans la bobine $b_i$, couple qui est encaissé par l'appui du galet 12 sur la rampe 13a. En conséquence, la tension dans le lien (câble) variateur 8 sera décelée, enregistrée et régulée par la mesure de l'effort exercé sur la rampe 13a, mesure réalisée par un dispositif connu, représenté en 33, par exemple, un capteur-détecteur. Dès que l'effort sur la rampe dépasse une valeur prédéterminée, le système de régulation (figure 7) donne l'ordre à l'organe moteur 25 du lien tracteur 5, à l'entrée de la zone AB (figure 6) de décélération, d'accélérer pendant un temps donné, ou d'effectuer une rotation supplémentaire pour ramener la tension dans les limites voulues.

Bien entendu, comme on le voit aux figures 7 et 8, un système symétrique de régulation agit sur le moteur 25 du lien tracteur 6, à la sortie de la zone d'accélération, et ceci pour deux raisons:

— en premier lieu, il est évident qu'on ne peut réguler la tension en se contentant d'augmenter chaque fois la vitesse du lien 5, car on augmenterait constamment la vitesse du système. Il faut donc qu'il y ait interconnexion entre les moteurs 25 des liens tracteurs 5 et 6, de manière à réaliser une régulation autour d'une vitesse moyenne de l'ensemble funiculaire;

— en second lieu, le système de transport de l'invention doit, conformément à la législation sur la sécurité des transports, disposer de moyens de freinage et d'arrêt d'urgence. Pour éviter une augmentation de la tension du lien variateur en petite vitesse, il faut réaliser, par la régulation, un équilibre de freinage entre les liens tracteurs 5 et 6, qui encaissent pratiquement tout l'effort de freinage ou d'arrêt.

La disposition judicieuse de boucles de lien tracteur évitera, dans le dispositif de l'invention, tout surcroît de tension du lien variateur, aussi bien lors du lancement du système, que pendant son fonctionnement normal, un freinage ou un arrêt d'urgence.

Les moyens régulateurs permettent une interconnexion entre les organes moteurs des liens tracteurs bouclés.

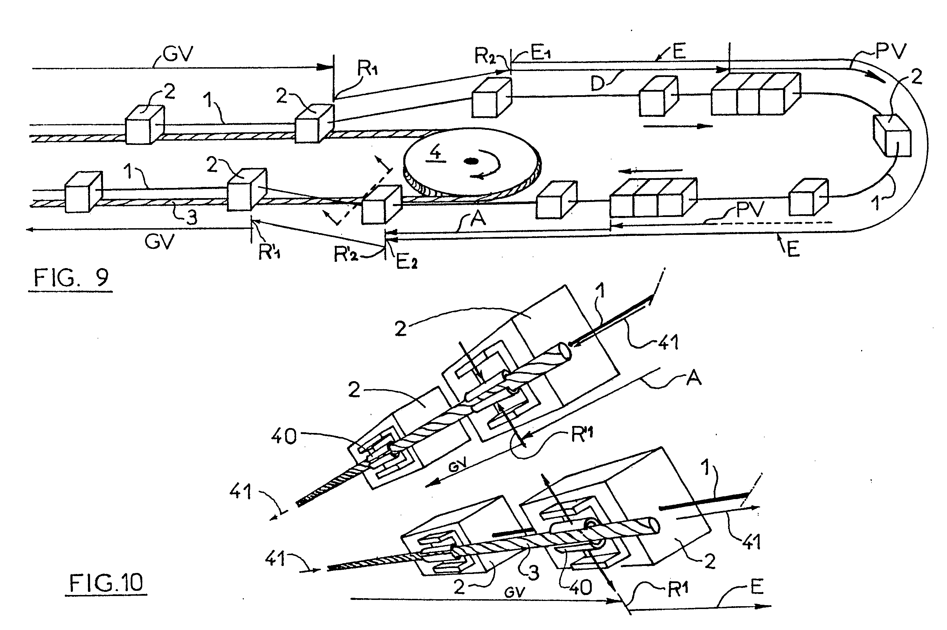

On a illustré aux figures 9 et 10, une autre variante préférentielle de construction: la (ou les) zones de station sont prévues aux extrémités de la boucle formée par le câble tracteur. On voit que la chaîne de variation 1 suit, dans les zones d'extrémité E, un trajet $E_1E$ qui s'écarte sensiblement de celui du câble tracteur 3 renvoyé par la roue motrice 4. Cette construction est voisine de celle de la figure 1, à la différence que les zones de station sont situées aux extrémités de la voie du système.

On voit que, conformément à l'invention, le câble tracteur laisse libre la zone d'extrémité E qui est la zone de variation de vitesse des mobiles 2 solidaires du lien variateur 1. Les mobiles sont, chacun, équipés d'un dispositif à pince 40 destiné à réaliser leur liaison intermittente avec le câble tracteur (figure 10). Si on considère que le sens de déplacement des mobiles est celui indiqué par les flèches 41, les pinces sont commandées à l'ouverture lorsque les mobiles arrivent au début du tronçon $R_1 R_2$ de raccordement sur le lien variateur. Le mobile est alors désolidarisé du câble tracteur, et suit le trajet du lien variateur, passant par une zone de décélération, une zone de station ou de petite vitesse et une zone d'accélération (en figure 9, on a référencé ces zones respectivement par les lettres D, PV, A). Enfin, le mobile atteint le second tronçon de raccordement $R'_1 R'_2$ où sa pince est commandée à la fermeture sur le câble tracteur. Le mobile (2) peut alors rentrer dans la zone à grande vitesse GV, le long de laquelle il est solidaire des deux câbles variateur et tracteur (figures 9 et 10).

Dans ce mode de réalisation, on a ainsi un seul câble tracteur bouclé sur lui-même et un seul lien variateur. Les trajets de ces deux éléments s'écartent l'un de l'autre aux extrémités de la boucle, ce qui définit, le long de la voie du système de transport, deux zones à grande vitesse et deux zones de station aux extrémités. On n'a représenté qu'une seule zone d'extrémité. La loi de vitesse des mobiles à l'extrémité opposée peut être indentique ou différente, selon le trajet suivi par le lien variateur (chaîne) et les mobiles qui en sont solidaires.

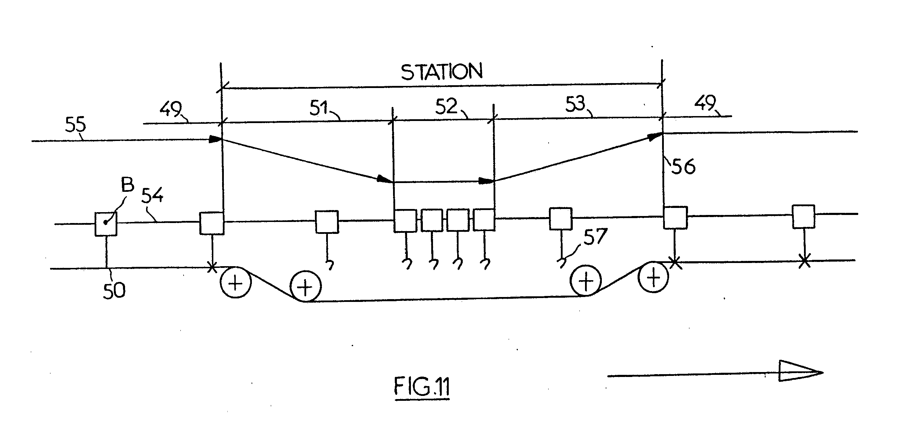

Pour la partie de la description qui suit, on rappelle que le terme "STATION" (figure 11) désigne la zone parcourue par un mobile solidaire d'un boggie B, entre le moment où ce boggie vient de lâcher le câble tracteur 50 et le moment où il se resolidarise de ce câble tracteur. Entre ces deux moments, le boggie considéré aura parcouru successivement une zone 51 de décélération, une zone 52 de petite vitesse, et une zone 53 d'accélération. De part et d'autre de la station, on retrouve, bien entendu, des zones 49 à grande vitesse. Parallèlement au cheminement du câble tracteur 50 et du câble variateur 54, on a tracé un diagramme des vitesses 55.

Dans ce qui précède, on a décrit des systèmes de rampes et de galets qui, dans les zones variées de décélération ou d'accélération, permettent de débobiner ou de réembobiner le câble variateur, afin de réaliser telle ou telle loi de vitesse prédéterminée inscrite par construction dans les rampes.

Les exemples de systèmes de régulation de la tension du câble variateur en basse vitesse qui ont été décrits jusqu'ici, intéressent un organe qui peut être situé hors de la station. Ces systèmes peuvent notamment agir sur les moteurs d'entraînement des tronçons de câble tracteur.

Les nouveaux exemples de dispositifs de régulation de tension donnés ci-dessous, ont ceci de particulier qu'ils peuvent agir dans le seul cadre d'une station, sans influencer, par quelque mode que ce soit, les moteurs d'entraînement et la vitesse de ces moteurs d'entraînement.

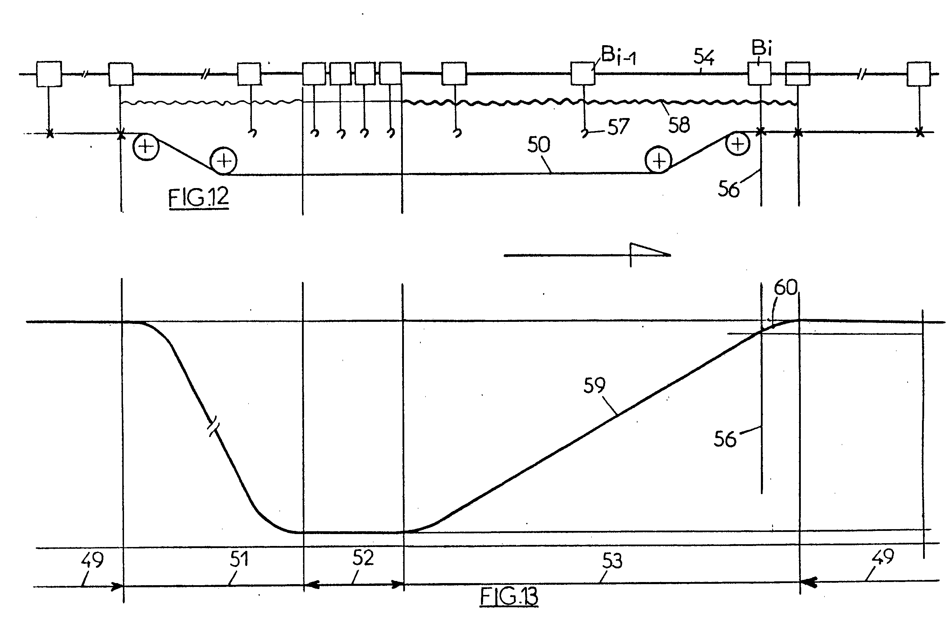

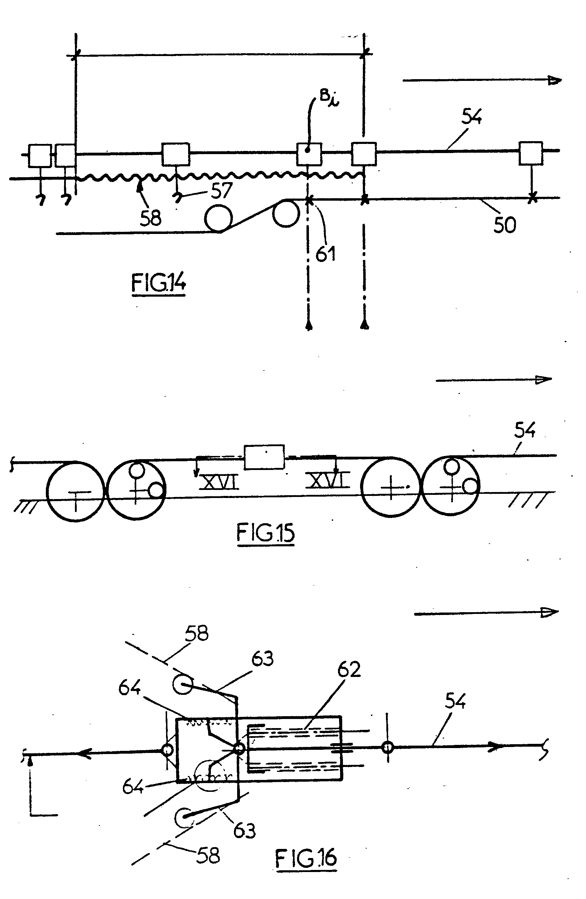

Un premier exemple d'un tel dispositif de régulation est illustré sur la figure 12, placée en correspondance avec le diagramme des vitesses de la figure 13. Dans ce cas, on utilise des moyens de régulation capables de faire déplacer vers l'amont la position du point 56 où le boggie se resolidarise du câble tracteur 50. On voit ainsi le boggie $B_i$ saisir le câble tracteur 50 par sa pince 57 avant la fin de la zone d'accélération 53 où les rampes 58 débobinet le câble variateur 54.

La courbe 59 du diagramme des vitesses correspond à la variation des vitesses obtenue à l'aide des seules rampes 58. Bien entendu, dès que la pince 57 saisit le câble tracteur 50, la vitesse du boggie n'est plus tributaire des rampes 58: la variation des vitesses est alors conforme au nouveau tracé 60. Etant donné que ce nouveau tracé correspond à une vitesse plus rapide que celle de la courbe 59, les rampes 58 continuant à débobiner une certaine longueur de câble variateur 54 après l'instant correspondant au point 56, on obtient du mou dans le tronçon du câble variateur séparant le boggie $B_i$ du boggie $B_{i+1}$ qui le précède immédiatement. Ce mou prend naissance au détriment du mou présent dans le câble variateur au niveau de la station considérée. Ainsi, cette opération permet de retendre le câble variateur 54 au niveau de cette station.

Pour détecteur la söüs-tension du câble variateur 54 au niveau de la station, on peut utiliser tout moyen connu. En particulier, on peut réaliser une détection du synchronisme entre les boggies qui entrent en station, et ceux qui en sortent.

Pour obtenir une régulation de l'instant où la pince 57 saisit le câble de traction 50, on peut aussi agir sur la position d'une rampe de commande qui provoque l'ouverture de la pince 57, alors que la pince 57 reste fermée lorsqu'elle est soumise à la seule action de son ressort de rappel.

Une combinaison simple de moyens connus permet de cette façon de réaliser la régulation désirée: la détection du retard d'un boggie qui sort de la station fait reculer la rampe de commande destinée à maintenir la pince ouverte. Plus le retard augmente, plus cette rampe de commande recule. Plus le boggie saisit le câble tracteur 50 tôt, plus on retend le câble variateur 54 dans la station concernée.

Il est clair également que tout mou du câble variateur 54 entrant en station est immédiatement détecté, et que le dispositif de régulation corrige de suite cette augmentation de mou. On a ainsi un système d'auto-régulation qui agit de proche en proche sans jamais modifier la vitesse des systèmes d'entraînement du câble tracteur 50.

Suivant une variante illustrée sur la figure 14, il est avantageux de concevoir l'ensemble de façon que la saisie normale du câble tracteur 50 par la pince 57 de chaque boggie ait lieu à un emplacement 61 fixé, par construction, avant la fin des rampes 58 commandant le débobinage. L'emplacement effectif de saisie du câble tracteur par les pinces peut ainsi se déplacer de part et d'autre de l'emplacement normal ou théorique 61. En permettant ce déplacement, on introduit un système stationnaire de transfert de mou de proche en proche d'une station à la suivante, mais le fait de permettre à chaque pince de saisir le câble tracteur 50 en aval de l'emplacement théorique 61 fixé par construction permet de donner du mou au câble tracteur 50 dans la station considérée, en empêchant le départ de la quantité de mou correspondant à la fermeture de la pince 57 à l'emplacement théorique 61.

Suivant une autre variante, illustrée sur les figures 15 et 16, les moyens de régulation sont constitués par un système élastique tel qu'un ressort 62 intercalé sur le tronçon du câble variateur 54 qui sépare deux boggies consécutifs. Une contrainte prédéterminée est de préférence donnée au ressort.

On comprend qu'un surcroît de tension qui s'accumule peu à peu dans la station provoquera une compression des ressorts 62 dans la zone de petite vitesse 52, aussitôt qu'en cet endroit, la tension du câble variateur 54 dépassera la valeur de la précontrainte des ressorts 62. On obtient donc une limitation de la tension du câble variateur 54.

On peut perfectionner le système en associant chaque ressort 62 à deux cliquets de nonretour 63, susceptibles de venir en prise sur des crémaillères 64. Lorsque les cliquets sont livrés à l'action du seul ressort 62, leurs extrémités actives respectives restent en prise sur les crémaillères 64 pour verrouiller le mécanisme et empêcher tout débattement du ressort 62. Lorsque les extrémités libres des cliquets 63 prennent appui sur des rampes d'ouverture 58, ces cliquets sont conduits à distance des crémaillères 64, si bien que le mécanisme se trouve être déverrouillé pour permettre le libre débattement du ressort.

Ainsi, des rampes d'ouverture 58 sont prévues dans la zone à basse vitesse de chaque station, mais sont absentes dans la zone de réaccélération. Les cliquets 63 empêchant ainsi le ressort 62 de reprendre sa position naturelle lorsque, au cours de la réaccélération, la tension du câble variateur 54 décroit en sens inverse de la vitesse. Ce processus revient à donner du mou dans le câble variateur 54 dans la station considérée. Des rampes sont prévues à l'entrée de chaque station, pour faire sauter les cliquets 63 au moment du passage dans la zone de décélération. Le mou qui est donné au câble variateur 54 dans une station donnée est automatiquement compensé par un accroissement de la tension de ce même câble dans la station suivante.

Dans le cas où il y a une dérive continue, due par exemple à une forte pente dans un intervalle compris entre deux stations, le dispositif de régulation qui vient d'être décrit est moins avantageux que ceux qui ont été décrits précédemment: la correction de longueur n'est pas rapide compte tenu de ce que la variation obtenue est divisée par le rapport des vitesses extrêmes. Ce dispositif est, par contre, avantageux lorsqu'il s'agit non plus d'une dérive faible maintes fois répétées, mais d'un excédent brutal qui a fait prendre un retard nuisible à un boggie ou à un petit nombre de boggies.

Un exemple chiffré permettrait de faire aisément saisir le système: Supposons qu'un corps étranger introduise à l'entrée de la station, sur un boggie, un retard de L mètres. Supposons en outre que

$$R = \frac{V}{v}$$

représente le rapport entre la grande vitesse V des zones à grande vitesse 49 et la petite vitesse v de la zone à petite vitesse 52. En ce cas, le retard de L mètres du boggie encore dans la zone proche de la zone à grande vitesse va se traduire immédiatement par un allongement égal à

$$\frac{L}{R}$$

des systèmes élastiques situés en cet instant dans la zone de petite vitesse 52. Ainsi, la seule surtension du câble variateur 54 qui en résultera sera la surtension correspondant à la sur-compression des systèmes élastiques pour l'allongement égal à

$$\frac{L}{R},$$

et l'excédent de tension sera aisément avalé.

Par contre, le retour à la normale ne se fera que par fractions de la valeur

$$\frac{L}{R}$$

à chaque passage de boggie.

Suivant une autre variante illustrée sur les figures 7 à 9, le problème des surtensions dans le câble variateur 54 peut aussi être résolu non plus en jouant sur des variations locales de la longueur de ce câble, mais en soulageant localement ce câble variateur grâce à un effort d'entraînement prélevé directement sur le câble tracteur, par l'intermédiaire d'un mécanisme à friction.

Ce type de solution est avantageux, par exemple, si un accident mécanique tel qu'un grippage de roulement ou qu'une introduction de corps étranger dans les mécanismes exerce un freinage permanent sur un boggie donné. Dans ce cas, l'intensité du freinage est accrue lorsque le boggie amorce une décélération en début de station, et lorsque ce boggie aura atteint la zone de petite vitesse, la surtension du câble variateur 54 aura ainsi été multipliée par le rapport R des vitesses des zones à grande et à petite vitesse.

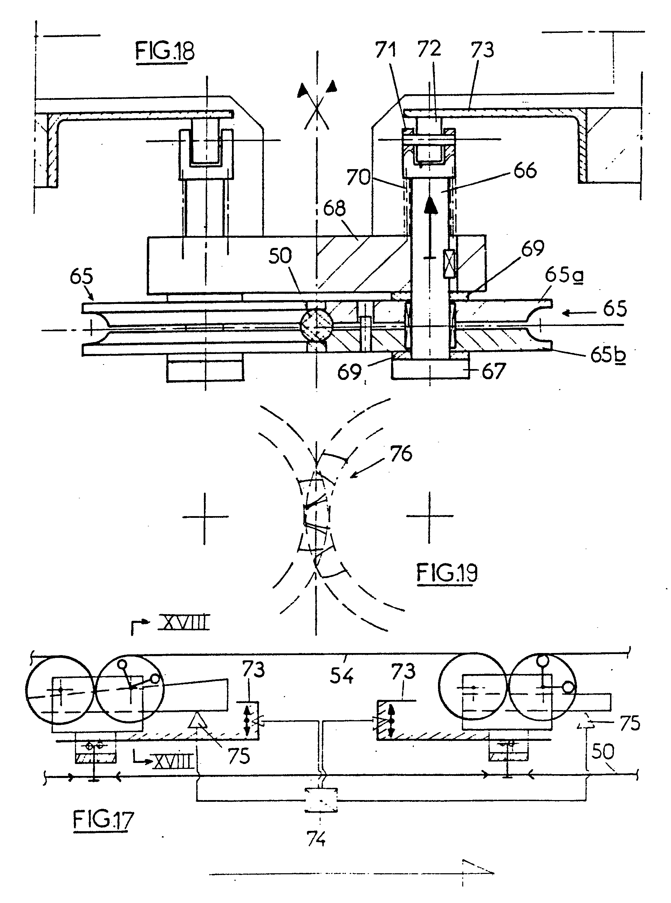

Dans la pratique, chaque boggie est pourvu de deux organes de liaison avec le câble tracteur. Le premier organe de liaison est celui que solidarise ledit boggie du câble tracteur dans les zones à grande vitesse, et on sait qu'il peut s'agir, par exemple, d'une pince. Le deuxième organe de liaison est capable d'assurer un entraînement par frottement avec un glissement de degré variable. L'intensité du frottement doit pouvoir être réglée en fonction de la surtension à compenser, de façon que la compensation ait lieu par une force d'entraînement supplémentaire fournie par le câble tracteur. Le terme "frottement" est utilisé ici dans son sens le plus large: dans le cas de l'exemple illustré sur les figures 17 à 19 on trouve par exemple un système qui pince le câble tracteur entre deux poulies 65 avec une intensité de serrage variable, ou un freinage gradué des poulies sur un arbre de transmission 66.

Plus précisément, on voit que chaque poulie 65 comprend deux demi-poulies complémentaires 65*a* et 65*b* sensiblement identiques et montées pour tourner sur le même arbre de transmission 66 solidaire du boggie B$_i$ considéré. Cet arbre 66 est immobilisé en rotation dans le boggie B$_i$, et un ressort agissant sur l'extrémité supérieure de l'arbre 66 tend en permanence à pincer entre la tête inférieure 67 de l'arbre 66 et un palier 68 un empilage comprenant les demi-poulies 65*a* et 65*b* et des disques de friction 69. Ce ressort 70 est adjacent à une chape 71 portant un galet 72 susceptible de prendre appui sur des rampes 73. Un dispositif d'asservissement 74 en liaison avec un mécanisme de positionnement des rampes 73 et des capteurs d'effort 75 positionne les rampes 73 de façon à combattre plus ou moins l'effort de pincement fourni par le ressort 70.

On comprend qu'en l'absence de surtension anormale, les capteurs 75 ne captent aucun effort suffisamment intense pour faire déplacer les rampes 73. Ces rampes restent alors suffisamment basses pour desserrer les demi-poulies 65*a* et 65*b*. Au contraire, en cas de surtension dans le câble variateur 54, les rampes 73 s'élèvent plus ou moins de manière à laisser le ressort 70 agir sur l'empilage, pour réaliser un entraînement par friction.

On note que les flasques des poulies 65 portent de préférence des dentures 76 sur leur périphérie. Un engrènement de ces dentures assure un équilibrage des forces de frottement transmises par l'intermédiaire des deux poulies.

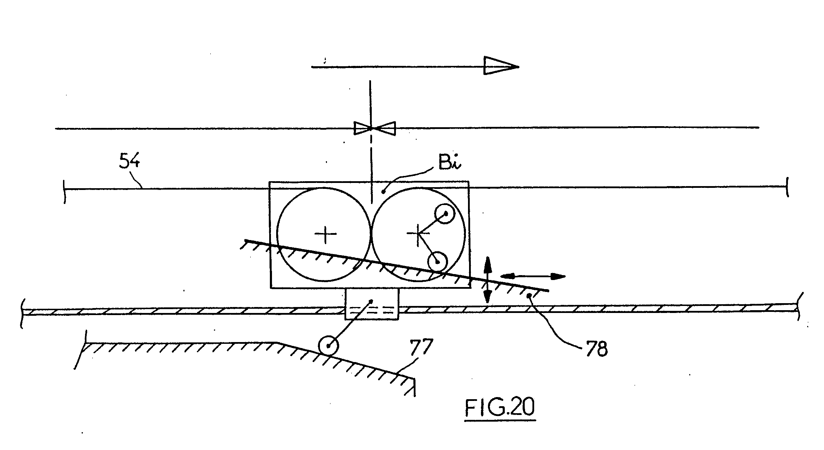

Suivant un dernier exemple illustré sur les figures 20 à 22, on peut aussi, contrairement au cas des figures 12 à 14 où une régulation de la tension du câble variateur 54 est obtenue en faisant en sorte de solidariser les éléments du câble variateur sur le câble tracteur avec un pas ajustable, réaliser une variation de pas tout en laissant fixe la position des rampes 77 commandant la fermeture des pinces 57. Pour cela, il suffit, au préalable, d'ajuster le pas du câble variateur par tout moyen connu tel que: variation du diamètre des bobines d'enroulement des boggies, variation de l'orientation ou de la position des butées et/ou des rampes 78 qui limitent la longueur de câble variateur débobiné.

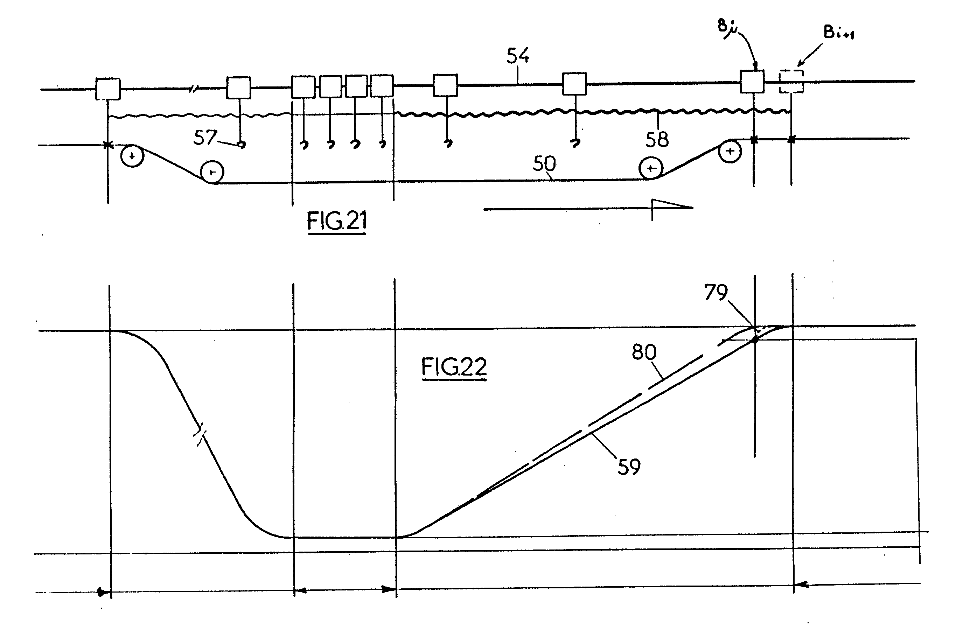

Comme on le voit sur la figure 22, tout ceci a pour conséquence de modifier très légèrement la loi de vitesse correspondant à la courbe 59, soit d'une façon ponctuelle, conformément à la courbe 79, soit de façon plus continue, conformément à la courbe 80.

Les moyens régulateurs de tension du lien variateur suivant l'invention permettent d'une part de ménager le câble variateur en évitant que ce câble ne soit soumis à des tensions locales trop élevées, et d'autre part d'éviter les à-coups dans l'entraînement des mobiles, en particulier au moment où chaque mobile se resolidarise du câble tracteur.

Les systèmes de régulation qui ont été décrits jusqu'ici protègent totalement la zone à basse vitesse des surtensions dans les cas où des glissements aléatoires des pinces auraient provoqué de la "consommation de lien", c'est-à-dire dans le cas où entre les points d'entrée et de sortie de la station, la longueur de câble variateur disponible deviendrait plus petite que la longueur du câble tracteur.

La suite de la présente description traite de la façon de protéger la zone à basse vitesse des tensions élevées pouvant résulter de causes telles que:

— Multiplication importante du rapport des vitesses extrêmes.
— Frottement excessif ou grippage d'un roulement.
— Effort dû à la position "en chaînette" de la portion de câble variateur pendant librement entre deux mobiles successifs.

Dans ce cas, l'invention prévoit un système de protection dont le principe de fonctionnement peut s'énoncer de la manière suivante: on fait en sorte qu'un mobile en décélération tire toujours sur son câble arrière, ou amont, mais jamais sur son câble avant, ou aval, au-delà d'une certaine limite de traction prédéterminée, tandis qu'au contraire un mobile en décélération tire toujours sur son câble avant, ou aval, mais jamais sur son câble arrière, ou amont, au-delà d'une certaine limite de traction prédéterminée.

Les exemples qui suivent, illustrant le principe de fonctionnement précité, sont donnés à titre non limitatif.

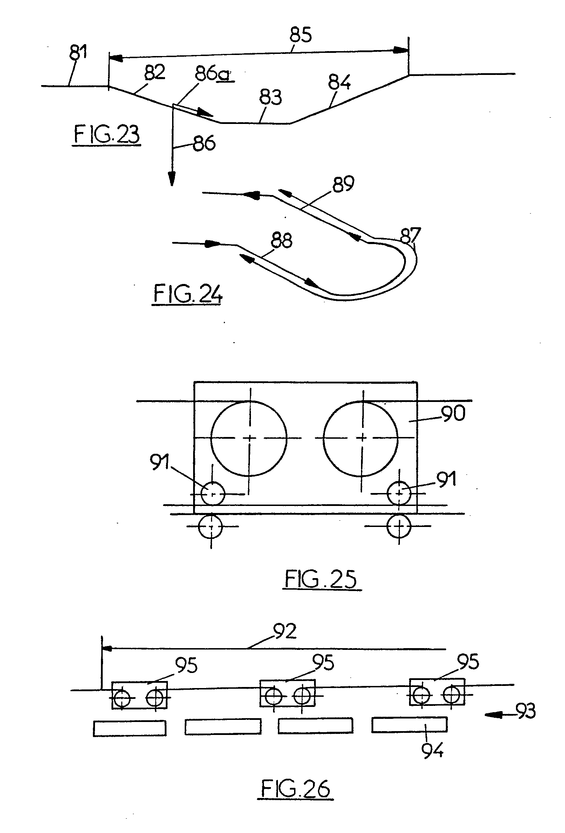

La figure 23 montre une portion de circuit comprenant une zone à grande vitesse 81, une zone de décélération 82, une zone de petite vitesse 83, et une zone d'accélération 84, les zones 82, 83 et 84 constituant une station 85. Pour permettre le mode de fonctionnement décrit ci-dessus, la zone de décélération 82 a été conçue en pente descendante, alors que la zone d'accélération 84 a été conçue en pente ascendante.

Lorsqu'un mobile se trouve dans la zone 82, la composante de la force de gravité 86 obtenue par projection de cette force sur le plan de roulement est bien une force 86a dirigée de façon à engendrer une traction du mobile sur son câble arrière, cette traction soulageant d'autant la tension du câble avant. Sans la présence de la pente, on sait que la tension du câble avant se serait trouvée multipliée dans la zone des basses vitesses.

La figure 24 montre le même principe de réalisation, mais au niveau de l'extrémité d'un circuit bouclé. La station 87 est disposée sur un terrain incliné qui confère à la zone de décélération 88 une pente descendante et à la zone d'accélération 89 une pente ascendante.

Suivant un autre exemple illustré sur la figure 25, on peut accroître l'inertie des mobiles 90 soit en accroissant directement leur masse, soit indirectement en dotant chaque mobile d'au moins un volant d'inertie lié en rotation avec les organes de roulement 91 de ce mobile.

Dans ce cas, il est clair que, dans chaque zone de décélération, l'énergie cinétique des mobiles, ou des volants, va tendre à accélérer les mobiles en provoquant une tension de leur câble arrière, le phénomène inverse se produisant dans les zones d'accélération.

Dans le cas de l'exemple illustré sur la figure 26, on dispose tout au long des zones de décélération 92, ou sur une partie de ces zones, un moteur linéaire 93 du type suivant lequel des bobinages 94 sont logés dans la partie fixe alors que l'induit non bobiné est logé dans le mobile 95.

Bien entendu, au lieu d'utiliser un moteur électrique linéaire, on pourrait tout aussi bien utiliser tout système de traction mécanique, hydraulique, pneumatique, magnétique, électrique, ou autre du type connu capable d'exercer sur les mobiles en décélération une poussée qui soit dirigée dans le sens du mouvement et qui soit suffisante pour au moins équilibrer toutes les causes accidentelles et aléatoires de freinage pouvant se manifester.

**Revendications**

1. Dispositif de transport de type funiculaire, composé d'une suite de mobiles (2) qui circulent le long d'un trajet bouclé sur lui-même, chaque mobile étant solidaire en permanence d'un premier lien variateur (1) qui réalise la variation de vitesse de déplacement de chaque mobile, et étant entraîne sur une partie du trajet par un second lien de traction (3), qui circule sur une voie bouclée à vitesse élevée et identique en tous points à un instant donné, caractérisé en ce que chaque mobile (2) est rendu solidaire du second lien (3) par des moyens de liaison intermittente montés sur chaque mobile (2) et que le premier lien variateur (1) est pourvu de moyens régulateurs, pour maintenir sa tension mécanique constamment au-dessous d'un seuil prédéterminé, notamment dans les zones à vitesse variable des mobiles (2).

2. Dispositif suivant la revendication 1, caractérisé en ce que le premier lien (1), ou lien variateur, est constitué par des chaînes à maillons de longueur variable.

3. Dispositif de transport suivant la revendication 1, caractérisé en ce que le lien de traction est constitué par au moins un câble (3) circulant à une vitesse constante élevée égale à la plus grande vitesse du dispositif de transport.

4. Dispositif de transport suivant la revendication 3, caractérisé en ce que le câble tracteur (3) est formé de plusieurs tronçons de câble (5, 6, 7), chacun d'eux étant bouclé sur lui-même et disposé dans les zones de déplacement à grande vitesse des mobiles du dispositif.

5. Dispositif de transport suivant la revendication 4, caractérisé en ce que les boucles successives de câble de traction (3) laissent libres entre elles les intervalles correspondant, le long du trajet des mobiles, aux zones de variation de vitesse ou de petite vitesse, appelées aussi zones de station.

6. Dispositif de transport suivant l'une quelconque des revendications 1 et 2, caractérisé en ce que le lien variateur (1) est une chaîne à maillons du type à bobines (b) d'enroulement (ou de déroulement) de lien souple (8).

7. Dispositif de transport suivant l'une quelconque des revendications 1 et 2, caractérisé en ce que le lien variateur (1) est une chaîne sans fin, bouclée sur elle-même à maillons déformables (M) de périmètre constant défini par un câble ou un ruban (22).

8. Dispositif de transport suivant l'une quelconque des revendications précédentes, caractérisé en ce que le lien variateur (1) est programmé, en chaque point de ce trajet, pour qu'il y ait un écart déterminé qui sépare un mobile de celui qui le suit et de celui qui le précède, l'ensemble mécanique obéissant en tous points à une loi de vitesse pré-programmée, et passant cycliquement par les mêmes étapes de cette loi.

9. Dispositif de transport suivant l'une quelconque des revendications 3 à 5, caractérisé en ce que les moyens de liaison d'un mobile sur le câble de traction (3) sont constitués par des pinces de friction (P) qui désolidarisent le mobile concerné du câble à l'entrée d'une zone de décélération, pour le resolidariser du câble de traction (3) à la sortie d'une zone d'accélération.

10. Dispositif de transport suivant l'une quelconque des revendications 3 à 5, caractérisé en ce que les moyens de liaison mobile-câble de traction sont constitués par des paires de taquets (t) articulés et portés par le câble tracteur.

11. Dispositif de transport suivant l'une quelconque des revendications précédentes, caractérisé en ce qu'il comporte une structure fixe, équipée de rampes inclinées (23) au moins dans les zones de variation de vitesse et dans la zone de petite vitesse, ces rampes fixes agissant sur des éléments de la suite des mobiles pour réaliser les variations de vitesse.

12. Dispositif de transport suivant l'une quelconque des revendications 4 à 7, caractérisé en ce chaque boucle (5), (6), (7) de câble de traction (3) est muni d'organes moteurs d'entraînement (25) à vitesse constante réglable.

13. Dispositif de transport suivant la revendication 11, caractérisé en ce que les moyens régulateurs (29) comportent, outre des dispositifs d'affichage (0) d'asservissement (31) et de commande, un ou plusieurs capteurs-détecteurs (33) de l'effort encaissé par la rampe fixe (13a) de la structure dans la ou les zones où les tensions sur les liens sont maximales.

14. Dispositif de transport suivant la revendication 13, caractérisé en ce que les capteurs-détecteurs (33) détectent la valeur du couple appliqué sur les rampes (13a) du système fixe au moyen des organes de roulement ou de glissement portés par les mobiles.

15. Dispositif de transport suivant l'une quelconque des revendications précédentes, caractérisé en ce qu'il comprend des moyens de sécurité, pour freinage ou arrêt d'urgence, et des moyens de démarrage, les efforts et la tension provoqués par les actions de ces moyens étant presque intégralement encaissés par la ou les boucles (5), (6), (7), de câbles de traction.

16. Dispositif de transport suivant l'une quelconque des revendications 1 à 3, 6 à 9 et 11, caractérisé en ce qu'il comporte un seul câble de traction (3) et un seul câble variateur (1), chacun d'eux étant bouclé sur lui-même, tandis que le trajet du câble variateur (1) s'écarte du trajet du câble de traction (3) aux extrémités opposées de la boucle fermée, pour définir deux zones de circulation à grande vitesse et deux zones de station aux extrémités de la voie suivie par les mobiles du dispositif de transport.

17. Dispositif de transport suivant l'une quelconque des revendications 1 à 6, caractérisé en ce que lesdits moyens régulateurs (29) agissent, pour une station donnée, dans le seul cadre de cette station, le terme "station" désignant la zone parcourue par un mobile entre le moment où il vient de lâcher le câble tracteur (1) et le moment où il se resolidarise du câble de traction (3).

18. Dispositif de transport suivant la revendication 17, caractérisé en ce que lesdits moyens de régulation sont capables de faire varier de façon contrôlée la position du point (56) où le mobile se resolidarise du câble de traction (3).

19. Dispositif de transport suivant la revendication 18, caractérisé en ce que les moyens régulateurs sont prévus pour commander les variations de la position du point de resolidarisation (57), en fonction de la tension dans le lien variateur (1) détectée au niveau de la station considérée.

20. Dispositif de transport suivant l'ensemble des revendications 9 et 19, caractérisé en ce que les pinces de friction (P) (57) sont capables de se solidariser du câble de traction en se fermant sous l'action d'un ressort de rappel (62) ou de se désolidariser du câble de traction en s'ouvrant sous l'action d'une rampe de commande (58), les moyens régulateurs étant prévus pour régler la position de cette rampe de commande (58), en fonction du retard des mobiles sortant de la station.

21. Dispositif de transport suivant l'ensemble des revendications 6 et 20, caractérisé en ce que la saisie normale du câble de traction par la pince de chaque mobile lieu à un emplacement fixé, par construction, avant la fin des rampes (58) commandant le débobinage, l'emplacement effectif de saisie du câble de traction par les pinces pouvant ainsi se déplacer de part et d'autre de l'emplacement normal.

22. Dispositif de transport suivant la revendication 21, caractérisé en ce que lesdits moyens régulateurs sont des moyens capables d'induire une variation de la loi de vitesse dans la station considérée.

23. Dispositif de transport suivant l'ensemble des revendications 6 et 22, caractérisé en ce que les moyens capables d'induire une variation de la loi de vitesse agissent sur la position des rampes (58) qui limitent la longueur de câble débobiné.

24. Dispositif de transport suivant la revendication 21, caractérisé en ce que lesdits moyens régulateurs sont constitués par un organe élastique (62) intercalé sur le tronçon du câble variateur qui sépare deux mobiles consécutifs.

25. Dispositif de transport suivant la revendication 24, caractérisé en ce que chaque organe élastique (62) est associé à un système de cliquets (63) qui autorise le débattement dudit organe seulement dans la zone de décélération et dans la zone à basse vitesse des stations.

26. Dispositif de transport suivant la revendication 17, caractérisé en ce que chaque mobile comporte deux moyens de liaison avec le câble de traction (50), à savoir: un premier qui solidarise ledit mobile au câble tracteur dans les zones à grande vitesse, et un deuxième capable d'effectuer un entraînement par frottement avec un glissement de degré variable.

27. Dispositif de transport suivant la revendication 26, caractérisé en ce que le deuxième moyen de liaison comprend, pour chaque mobile, un couple de poulies de serrage (65) pinçant entre elles le câble de traction (50), chaque poulie de serrage (65) étant composée de deux demipoulies complémentaires (65a) et (65b) montées pour tourner sur un même arbre (66) solidaire du mobile, et où les deux demipoulies se trouvent empilées avec des disques de friction (69), tandis que des moyens permettent de serrer plus ou moins l'empilement de chaque arbre en fonction de la surtension dans le lien variateur.

28. Dispositif de transport suivant l'ensemble des revendications 3 et 19, caractérisé en ce qu'on prévoit des moyens de sécurité pour maintenir en traction le câble arrière d'un mobile qui décélère ou le câble avant d'un mobile qui accélère.

29. Dispositif de transport suivant la revendication 28, caractérisé en ce que les systèmes de sécurité consistent à placer chaque zone de décéleration (82) en pente descendante, et chaque zone d'accélération (84) en pente ascendante.

30. Dispositif de transport suivant la revendication 28, caractérisé en ce que les systèmes de sécurité consistent en un accroîssement de l'inertie des mobiles (90), soit directement, par simple accroîssement de leur masse, soit indirectement, par utilisation de volahts d'inertie liés en rotation aux organes de roulement (91) des mobiles (90).

31. Dispositif de transport suivant la revendication 28, caractérisé en ce que les moyens de sécurité consistent en des systèmes capables d'exercer sur les mobiles (90) en décélération, une poussée orientée dans le sens du mouvement, cette poussée étant suffisante pour équilibrer au moins toutes les causes accidentelles et aléatoires de freinage susceptibles de sa manifester, lesdits systèmes pouvant utiliser tout système de traction mécanique, hydraulique, pneumatique, magnétique, électrique.

32. Dispositif de transport suivant la revendication 31, caractérisé en ce que lesdits systèmes consistent en des moteurs électriques linéaires (93) dont les bobinages (94) sont logés dans la partie fixe, et dont les induits sont logés dans les mobiles (95).

**Patentansprüche**

1. Transporteinrichtung vom Seilbahntypus, bestehend aus einer Reihe von Fahrzeugen (2), die entlang einer schleifen-förmigen Trasse umlaufen und deren jedes ständig mit einem ersten Variator-Seil (1) verbunden ist, das die Fördergeschwindigkeit jedes Fahrzeuges bewirkt, und deren jedes außerdem auf einem Teil der Trasse mittels eines zweiten Zugseils (3) gezogen ist, das auf einem schleifenförmigen Weg umläuft, und zwar mit höherer Geschwindigkeit, die an allen Stellen zu einem gegebenen Zeitpunkt die gleiche ist, dadurch gekennzeichnet, daß jedes Fahrzeug (2) mit dem zweiten Zugseil (3) durch Verbindungsmittel fest verbunden ist, die intermittierend an jedem Fahrzeug (2) montiert sind, und daß das erste Variator-Seil (1) mit Regeleinrichtungen ausgestattet ist, um dessen mechanische Spannung ständig oberhalb eines vorgegebenen Schwellenwertes zu halten, insbesondere in den Bereichen variabler Geschwindigkeit der Fahrzeuge (2).

2. Vorrichtung nach Anspruch 1, dadurch gekennzeichnet, daß das erste Seil (1) oder Variator-Seil aus einer Kette mit Gliedern variabler Länge besteht.

3. Transporteinrichtung nach Anspruch 1, dadurch gekennzeichnet, daß das Zugseil aus wenigstens einem Kabel (3) besteht, das mit erhöhter konstanter Geschwindigkeit umläuft, die gleich der größten Geschwindigkeit der Transporteinrichtung ist.

4. Transporteinrichtung nach Anspruch 3, dadurch gekennzeichnet, daß das Zugkabel (3) aus mehreren Kabelabschnitten (5, 6, 7) besteht, deren jeder schleifenförmig ausgebildet und in den Bereichen des Verfahrens der Fahrzeuge der Vorrichtung hoher Geschwindigkeit angeordnet ist.

5. Transporteinrichtung nach Anspruch 4, dadurch gekennzeichnet, daß die aufeinanderfolgenden Schlaufen des Zugkabels (3) zwischen sich Zwischenräume freilassen, die entlang der Trasse der Fahrzeuge den Bereichen der Variation der Geschwindigkeit oder kleiner Geschwindigkeit entsprechen, auch Haltezonen genannt.

6. Transporteinrichtung nach einem der Ansprüche 1 oder 2, dadurch gekennzeichnet, daß das Variator-Seil (1) eine Kette mit Gliedern vom Typus von Rollen zum Aufrollen oder Abrollen des nachgiebigen Seiles (8).

7. Transporteinrichtung nach einem der Ansprüche 1 oder 2, dadurch gekennzeichnet, daß das Variator-Seil (1) eine endlose Kette ist, die eine Schlaufe bildet, und zwar aus verformbaren Gliedern (M) und konstantem Umfang, definiert durch ein Kabel oder ein Band (22).

8. Transporteinrichtung nach einem der vorausgegangenen Ansprüche, dadurch gekennzeichnet, daß das Variator-Seil (1) an jedem Punkt dieser Trasse derart ausgerüstet ist, daß es einen vorgegebenen Abstand hat, der ein Fahrzeug von dem nachfolgenden und von dem vorausgehenden trennt, wobei die gesamte mechanische Einheit an allen Stellen einem vorprogrammierten Geschwindigkeitsgesetz gehorcht und zyklisch dieselben Phasen dieses Gesetzes durchläuft.

9. Transporteinrichtung gemäß den Ansprüchen 3 bis 5, dadurch gekennzeichnet, daß die Mittel zum Verbinden eines Fahrzeuges auf dem Zugkabel (3) aus Reibklemmen (P) bestehen, die am Eingang einer Verzögerungszone das betreffende Fahrzeug vom Kabel freisetzen, um es mit dem Zugkabel (3) am Ausgang einer Beschleunigungszone wieder fest zu verbinden.

10. Transporteinrichtung nach einem der Ansprüche 3 bis 5, dadurch gekennzeichnet, daß die Mittel zum Verbinden von Fahrzeug und Zugkabel aus Knaggen (t) bestehen, die am Zugkabel angelenkt und von diesem getragen sind.

11. Transporteinrichtung nach einem der vorausgegagenen Ansprüche, dadurch gekennzeichnet, daß diese eine feste Konstruktion aufweist, die mit geneigten Rampen (23) in den Bereichen der Veränderung der Geschwindigkeit und im Bereich kleiner Geschwindigkeit ausgestattet ist, und daß diese festen Rampen auf Folgeelemente der Fahrzeuge einwirken, um die Geschwindigkeitsveränderung durchzuführen.

12. Transporteinrichtung nach einem der Ansprüche 4 bis 7, dadurch gekennzeichnet, daß jede Schlaufe (5), (6), (7), des Zugkabels (3) mit Zugantriebsorganen (25) regelbarer konstanter Geschwindigkeit ausgestattet ist.

13. Transporteinrichtung nach Anspruch 11, dadurch gekennzeichnet, daß die Regeleinrichtungen (29) u.a. Vorrichtungen zum Befestigen, zum Steuern (31) und zum Regeln aufweisen, ferner einen oder mehrere Spannungs-Meßfühler-Detektoren (33), die von der festen Rampe (13a) der Konstruktion in der oder den Bereichen eingeschlossen sind, wo die Spannungen in den Seilen maximal sind.

14. Transporteinrichtung nach Anspruch 13, dadurch gekennzeichnet, daß die Meßfühler-Detektoren (33) die Größe des Momentes erfassen, das auch die Rampen (13a) des festen Systemes mittels der von den Fahrzeugen getragenen Abroll- oder Gleitorgange aufgebracht wird.

15. Transporteinrichtung nach einem der vorausgegangenen Ansprüche, dadurch gekennzeichnet, daß diese Sicherheitsmittel zum Abbremsen oder für den Nothalt aufweist, ferner Mittel zum Anfahren, wobei die durch diese Mittel erzeugten Kräfte und Spannungen fast völlig in der oder in den Schlaufen (5), (6), (7) des Zugkabels eingeschlossen sind.

16. Transporteinrichtung nach einem der Ansprüche 1 bis 3, 6 bis 9 und 11, dadurch gekennzeichnet, daß dies ein einziges Zugkabel (3) und ein einziges Variatorkabel (1) aufweist, deren jedes eine Schlaufe bildet, während die Trasse des Variator-Kabels (1) an den einander gegenüberliegenden Enden der geschlossenen Schlaufe einen Abstand zur Trasse des Zugkabels (3) hat, um zwei Laufzonen großer Geschwindigkeit und zwei Haltezonen an den Enden des Weges zu haben, der von den Fahrzeugen der Transporteinrichtung gefolgt wird.

17. Transporteinrichtung nach einem der Ansprüche 1 bis 6, dadurch gekennzeichnet, daß die genannten Regeleinrichtungen (29) bei einer bestimmten Station im einzigen Rahmen dieser Station arbeiten, wobei der Ausdruck "Station" die Zone bezeichnet, die von einem Fahrzeug durchlaufen wird zwischen dem Augenblick, wo es von dem Zugkabel (1) freikommt, und dem Augenblick, wo es mit dem Zugkabel (3) wieder fest verbunden ist.

18. Transporteinrichtung nach Anspruch 17, dadurch gekennzeichnet, daß die genannten Regeleinrichtungen dazu in der Lage sind, die Position jenes Punktes (56) in kontrollierter Weise zu verändern, an welchem das Fahrzeug mit dem Zugkabel (3) wieder fest verbunden ist.

19. Transportecnrichtung nach Anspruch 18, dadurch gekennzeichnet, daß die Regeleinrichtungen derart ausgestattet sind, daß sie die Veränderungen der Position des Punktes des Wiederfestsetzens (57) in Abhängigkeit von der Spannung des Variatorseiles (1), erfaßt auf der Höhe der in Rede stehenden Station, steuern.

20. Transporteinrichtung gemäß den beiden Ansprüchen 9 und 19, dadurch gekennzeichnet, daß die Reibungsklemmen (P) (57) dazu in der Lage sind, sich dadurch fest mit dem Zugkable zu verbinden, indem sie sich unter der Einwirkung einer Rückholfeder (62) schließen, oder sich von dem Zugkabel dadurch lösen, indem sie sich unter der Einwirkung einer Steuerrampe (58) öffnen, wobei die Regeleinrichtung en derart gestaltet sind, daß sie die Position dieser Steuerrampe (58) in Abhängigkeit vom Verzug der die Station verlassenden Fahrzeuge regeln.

21. Transporteinrichtung nach den Ansprüchen 6 und 20, dadurch gekennzeichnet, daß das normale Erfassen des Zugkabels durch die Klemme eines jeden Fahrzeuges an einem festen Ort mittels der Konstruktion stattfindet, vor dem Ende der Rampen (58), die das Abspulen steuern, wobei die tatsächliche Plazierung des Angriffspunktes des Zugkabels durch die Klemmen sich somit beidseits des normalen Ortes verschieben kann.

22. Transporteinrichtung nach Anspruch 21. dadurch gekennzeichnet, daß die genannten Regeleinrichtungen Mittel sind, die dazu in der Lage sind, eine Veränderung des Geschwindigkeitsgesetzes der in Rede stehenden Station herbeizuführen.

23. Transporteinrichtung nach den Ansprüchen 6 und 22, dadurch gekennzeichnet, daß die Mittel dazu in der Lage sind, eine Veränderung des Geschwindigkeitsgesetzes herbeizuführen, einwirkend auf die Position der Rampen (58), die die Länge des abgespulten Kabels begrenzt.

24. Transporteinrichtung gemäß Anspruch 21, dadurch gekennzeichnet, daß die genannten Regeleinrichtungen aus einem elastischen Organ (62) besteht, das auf jenem Abschnitt des Variatorkabels angeordnet ist, der zwei aufeinanderfolgende Fahrzeuge voneinander trennt.

25. Transporteinrichtung gemäß Anspruch 24, dadurch gekennzeichnet, daß jedes elastische Organ (62) einem Klinkensystem (63) zugeordnet ist, das das Abnehmen des genannten Organes lediglich in der Verzögerungszone und in der Zone geringer Geschwindigkeiten der Stationen herbeiführt.

26. Transporteinrichtung gemäß Anspruch 17, dadurch gekennzeichnet, daß jedes Fahrzeug zwei Mittel zum Verbinden mit dem Zugkabel (50) aufweist, nämlich ein erstes, das das genannte Fahrzeug mit dem Zugkabel in den Zonen hoher Geschwindigkeit verbindet, und ein zweites, das dazu in der Lage ist, eine Reibungsmitnahme unter Gleiten in variablem Maße zu bewirken.

27. Transporteinrichtung nach Anspruch 26, dadurch gekennzeichnet, daß das zweite Verbindungsmittel für jedes Fahrzeug ein Paar Klemmrollen (65) aufweist, die zwischen sich das Zugkabel (50) einklemmen, daß jede Klemmrolle (65) aus zwei komplementären Halbrollen (65a) und (65b) aufgebaut ist, die derart gelagert sind, daß sie auf ein und derselben, mit dem Fahrzeug festen Welle (66) umlaufen, und wobei auf die beiden Halbrollen Reibscheiben (69) aufgestapelt sind, während Mittel erlauben, mehr oder weniger die Stapel einer jeden Welle in Abhängigkeit von der Überspannung in dem Variatorseil anzupressen.

28. Transporteinrichtung nach den Ansprüchen 3 und 19, dadurch gekennzeichnet, daß Sicherheitsmittel vorgesehen sind, um das rückwärtige Kabel eines Fahrzeuges, das abbremst, oder das vordere Kabel eines Fahrzeuges, das beschleunigt, unter Zug zu halten.

29. Transporteinrichtung nach Anspruch 28, dadurch gekennzeichnet, daß die Sicherheitssysteme darin bestehen, daß jede Verzögerungszone (82) auf eine Abwärtsstrecke, und jede Beschleunigungszone (84) auf eine Aufwärtsstrecke gelegt ist.

30. Transporteinrichtung nach Anspruch 28, dadurch gekennzeichnet, daß die Sicherheitssysteme in einer Steigerung der Trägheit der Fahrzeuge (90) besteht, und zwar entweder direkt durch einfaches Vergrößern ihrer Masse, oder indirekt durch Anwendung von Trägheitsscheiben, die mit Rollorganen (91) der Fahrzeuge (90) drehfest verbunden sind.

31. Transporteinrichtung gemäß Anspruch 28, dadurch gekennzeichnet, daß die Sicherheitsmittel aus Systemen bestehen, die dazu in der Lage sind, auf die in Verzögerung befindlichen Fahrzeuge (90) eine in Bewegungsrichtung wirkende Kraft aufzubringen, die genügend groß ist, um wenigstens alle zufälligen und ungewollten Ursachen des Bremsens aufzufangen, wobei die Systeme jegliches System mechanischer, hydraulischer, pneumatischer, magnetischer oder elektrischer Traktion verwenden können.

32. Transporteinrichtung gemäß Anspruch 31, dadurch gekennzeichnet, daß die genannten Systeme aus elektrischen Linearmotoren (93) bestehen, deren Wickel (94) in dem festen Teil, und deren Läufer in den Fahrzeugen (95) untergebracht sind.

## Claims

1. A transport device of the funicular type, composed of a chain of cars (2) which circulate along a closed path, each car being permanently fixed to a first variable connection (1) which is responsible for the variation in speed of travel of each car, and being drawn on part of the journey by a second traction connection (3) which circulates on a closed track at a high speed which is identical throughout at a given moment, characterised in that each car (2) is fixed to the second connection (3) by means of intermittent coupling fitted to each car (2) and that the first variable connection (1) is provided with means of regulation to keep its mechanical tension constantly below a predetermined threshold, principally in the zones in which the cars (2) have a variable speed.

2. A device according to claim 1, characterised in that the first, or variable, connection (1) is constituted by chains with links of variable length.

3. A transport device according to claim 1, characterised in that the traction connection is constituted by at least one cable (3) travelling at a high constant speed equal to the highest speed of the transport device.

4. A transport device according to claim 3, characterised in that the traction cable (3) is formed by several cable sections (5, 6, 7), each of them being closed and arranged in the zones of high speed travel of the cars of the device.

5. A transport device according to claim 4, characterised in that the successive circuits of traction cable leave free between them the intervals corresponding to the zones of speed variation or of low speed, also called station zones, along the path of the cars.

6. A transport device according to either of the claims 1 and 2, characterised in that the variable connection (1) is a chain with links of the type with rolling (or unrolling) bobbins (b) for flexible connection (8).

7. A transport device according to either of claims 1 and 2, characterised in that the variable connection (1) is an endless chain with flexible links (M) of constant perimeter defined by a cable or a strip (22).

8. A transport device according to any one of the preceding claims, characterised in that the variable connection (1) is programmed at each point of its path so that there is a fixed space separating one car from the following one and from the preceding one, the whole mechanical assembly conforming to a pre-programmed pattern of speeds at all points, and passing in cycles through the same stages of this pattern.

9. A transport device according to any one of the claims 3 to 5, characterised in that the means of attachment of one car to the traction cable (3) are constituted by friction grabs (P) which release the car in question from the cable on entering a deceleration zone and re-attach it to the traction cable on leaving an acceleration zone.

10. A transport device according to any one of claims 3 to 5, characterised in that the means of connecting the car to the traction cable are constituted by pairs of dogs (t) pivoted on and carried by the traction cable.

11. A transport device according to any one of the preceding claims, characterised in that it includes a fixed structure fitted with inclined ramps (23) at least in the zones of speed variation and in the low speed zone, these fixed ramps acting on components in the train of cars in order to achieve the variations of speed.

12. A transport device according to any one of claims 4 to 7, characterised in that each section (5), (6), (7) of the traction cable (3) is fitted with drive components (25) of an adjustable constant speed.

13. A transport device according to claim 11, characterised in that the means of regulation (29) comprise, besides indicating (30) (?), servo-control (31) and control devices, one or several sensors (33) for detecting the forces absorbed by the fixed ramp (13a) of the structure in the zone or zones where the tensions on the connections are at a maximum.

14. A transport device according to claim 13, characterised in that the detector-sensors (33) detect the value of the couple applied to the ramps (13a) of the fixed system by means of rolling or sliding components carried by the cars.

15. A transport device according to any one of the preceding claims, characterised in that it includes safety measures for emergency braking or stopping, and means of starting, the forces and stresses caused by the action of these means being almost wholly absorbed by the loop or loops (5, 6, 7) of traction cable.

16. A transport device according to any one of the claims 1 to 3, 6 to 9, and 11, characterised in that it comprises a single traction cable (3) and a single variable cable (1), each of them being closed loop, whilst the path of the variable cable (1) moves away from the path of the traction cable (3) at the opposite ends of the closed loop, so as to define two zones of highspeed travel and two station zones at the ends of the track followed by the cars of the transport device.

17. A transport device according to any one of claims 1 to 6, characterised in that the above-mentioned regulating devices (29) act, for a given station, only in the confines of this station, the term "station" designating the zone passed through by a car between the moment when it releases the traction cable (1) and the moment when it re-attaches itself to the traction cable (3).

18. A transport device according to claim 17, characterised in that the above-mentioned means of regulation are capable of varying in a controlled manner the position of the point (56) at which the car re-attaches itself to the traction cable (3).

19. A transport device according to claim 18, characterised in that the means of regulation are provided to control the variations of the position of the point of re-attachment (57) in relation to the tension in the variable connection (1) detected at the level of the station in question.

20. A transport device according to the whole of the claims 9 and 19, characterised in that the friction grabs (P) are capable of attaching themselves to the traction cable by closing under the action of a return spring (62) or of releasing themselves under the action of a control lamp (58), the regulating means being provided to adjust the position this control ramp (58) in relation to the delay of the cars leaving the station.

21. A transport device according to the whole of claims 6 and 20, characterised in that the normal gripping of the traction cable by the grab of each car takes place in a fixed position, by the construction, before the end of the ramps (58) controlling the unwinding, the effective position of gripping the traction cable by the grabs thus being capable of being displaced on either side of the normal position.

22. A transport device according to claim 21, characterised in that the said means of regulation are means capable of causing a variation in the speed programme in the station in question.

23. A transport device according to the whole of claims 6 and 22, characterised in that the means capable of causing a variation in the speed programme act on the position of the ramps (58) which limit the length of cable unwound.

24. A transport device according to claim 21, characterised in that the said means of regulation are constituted by a flexible component (62) interposed in the section of variable cable which separates two consecutive cars.

25. A transport device according to claim 24, characterised in that each flexible component (62) is linked with a system of pawls (63) which allow movement of the said component only in the zone of deceleration and in the low speed zone of the stations.

26. A transport device according to claim 17, characterised in that each car carries two means of connection with the traction cable (50), namely: a first which attaches the said car to the traction cable in the high speed zone, and a second which is able to bring about a drive by friction with a variable degree of slip.

27. A transport device according to claim 26, characterised in that the second means of connection comprises for each car, a pair of compression pulleys (65) which pinch between them the traction cable (5), each compression pulley (65) being composed of two complementary half-pulleys (65a) and (65b) mounted to turn on the same shaft (66) fixed to the car; the two half-pulleys are stacked with friction discs (69), whilst methods exist of allowing the stack on each shaft to be more or less compressed in relation to the overload in the variable connection.

28. A transport device according to the whole of claims 3 and 19, characterised in that safety methods are provided to keep the rear cable of a decelerating car or the front cable of an accelerating car in traction.

29. A transport device according to claim 28, characterised in that the safety systems consist of placing each deceleration zone (82) in a descending slope, and each acceleration zone (84) in an ascending slope.

30. A transport device according to claim 28, characterised in that the safety systems consist of an increase in the inertia of the cars (90), either directly by simple increase in their mass, or indirectly by the use of inertia flywheels connected in rotation to the running-rollers (91) of the cars (90).

31. A transport device according to claim 28, characterised in that the safety methods consist of systems capable of exerting on decelerating cars (90) a thrust directed in the direction of movement, this thrust being sufficiently great to balance at least all the accidental and hazardous causes of braking liable to appear, the said system possibly being of any mechanical, hydraulic, pneumatic, magnetic, or electrical type.

32. A transport device according to claim 31, characterised in that the said systems consist of electrical linear motors (93) of which the windings (94) are located in the fixed part and the armatures are located in the cars (95).

FIG. 1

FIG. 2

FIG. 3

FIG. 4

FIG. 5

3

FIG.6

FIG.7

0 018 932

FIG. 8

FIG. 9

FIG.10

FIG.11

$B_{i-1}$    54    $B_i$

57    58

50    56

FIG.12

60

59

56

49    51    52    53    49

FIG.13

0 018 932

FIG.14

FIG.15

FIG.16

FIG.18

71  72  73

70  66

68

50  69

65  65a

65

65b

69  67

76

FIG.19

XVIII

73  54  73

75

75  50

FIG.17

XVIII

74

FIG.20

FIG.21

57

54

58

50

Bi

Bi+1

FIG.22

79

80

59

13

0 018 932

FIG.23

FIG.24

FIG.25

FIG.26